# EUROPÄISCHE PATENTSCHRIFT

(11) **EP 2 883 436 B1**
(45) Veröffentlichungstag und Bekanntmachung des Hinweises auf die Patenterteilung: **23.11.2016**
(21) Anmeldenummer: 14401111.1
(22) Anmeldetag: 04.12.2014
(51) Int. Cl.: A01C 17/00

(54) **VERFAHREN ZUR ERMITTLUNG VON EINSTELLDATEN FÜR ZENTRIFUGALSTREUER**
METHOD FOR DETERMINING SETTING DATA FOR CENTRIFUGAL SPREADER
PROCÉDÉ DE DÉTERMINATION DE DONNÉES DE RÉGLAGE POUR UN ÉPANDEUR CENTRIFUGE

(30) Priorität: 16.12.2013 DE 102013114110
(43) Veröffentlichungstag der Anmeldung: 17.06.2015
(73) Patentinhaber: Amazonen-Werke H. Dreyer GmbH & Co. KG, 49205 Hasbergen (DE)
(72) Erfinder: Rahe, Florian, 49504 Lotte (DE)

(56) Entgegenhaltungen:
- DE-A1-102009 004 114
- DE-T2- 3 887 218
- DE-T2-602005 002 083

## Beschreibung

Die Erfindung betrifft ein Verfahren zur Ermittlung von Einstelldaten für Zentrifugalstreuer. Zentrifugalstreuer werden in der Landwirtschaft vorrangig zur Verteilung von Düngerpartikel auf der Ackerfläche verwendet. Der Grund die Düngerpartikel, die den Dünger darstellen auf einer Ackerfläche zu verteilen, liegt darin, den auf der Ackerfläche wachsenden Pflanzen Nährstoffe in der erforderlichen Menge zuzuführen. Der Dünger stellt einen erheblichen Kostenfaktor dar. Um diesen Kostenfaktor möglichst gering zu halten, ist es nötig, den Dünger möglichst sparsam und gleichmäßig zu verteilen. Bei der Verteilung des Düngers sind zwei ungünstige Möglichkeiten in Bezug auf ein schlechtes Pflanzenwachstum denkbar. Die eine ungünstige Möglichkeit ist, auf der Ackerfläche insgesamt bzw. abschnittsweise zu viel Dünger zu verteilen. Die andere ungünstige Möglichkeit ist, auf der Ackerfläche insgesamt bzw. abschnittsweise zu wenig Dünger zu verteilen. Bei einem zu viel an Dünger kann es zusätzlich zu der Verschwendung des Düngers zu einem Pflanzensterben, bedingt durch beispielsweise einen ungünstigen pH-Wert der Erde für die Pflanze, kommen. Bei einem zu wenig an Dünger können die Pflanzen nicht ihr volles Potential entfalten. Bei beiden ungünstigen Möglichkeiten werden zusätzlich zu den Düngerkosten, Kosten bedingt durch entgangen Ertrag und somit entgangenen Gewinn verursacht, sogenannte Opportunitätskosten.

Es gibt eine Vielzahl verschiedener Düngersorten, die beim Verteilen mittels eines Zentrifugalstreuers unterschiedliche Streueigenschaften aufweisen. Somit muss der Zentrifugalstreuer die Möglichkeit aufweisen, für die verschiedenen Düngersorten so eingestellt werden zu können, dass bei einer geforderten Arbeitsbreite eine gute Düngerverteilung erzielt wird. Die Einstellung des Zentrifugalstreuers erfolgt düngerabhängig. Dabei sind die Einstellmöglichkeiten des Zentrifugalstreuers meist von Fabrikat zu Fabrikat und von Modell zu Modell unterschiedlich. Häufig verwendete düngerabhängige Einstellmöglichkeiten des Zentrifugalstreuers sind: Verstellung der Wurfschaufellängen, Verlagerung der Düngeraufgabefläche auf die Schleuderscheibe, Veränderung der Schleuderscheibendrehzahl, Veränderung der Wurfschaufelstellung der Wurfschaufeln auf der Schleuderscheibe und Anbauwinkel des Zentrifugalsteuers an den Schlepper, um nur einige zu nennen. Damit eine sinnvolle düngerabhängige Einstellung des Zentrifugalstreuers vorgenommen werden kann, muss der Dünger charakterisiert werden. Um der nötigen genauen Einstellung des Zentrifugalstreuers gerecht zu werden, sind im Laufe der Zeit verschiedene Methoden entwickelt worden, um die Charakteristiken der verschiedenen Düngersorten zu ermitteln.

Weiterhin sind mit der Zeit die Arbeitsbreiten immer größer geworden, auch die Vielfalt der Düngersorten ist gestiegen. Dadurch ist ein kritischer Bereich erreicht worden, dass bei kleinen Einstellabweichungen am Zentrifugalstreuer ein unzureichendes Arbeitsergebnis entsteht. Um den immer größer werden Arbeitsbreiten und der stetig steigenden Vielfalt an Düngersorten gerecht zu werden, müssen auch die Methoden weiterentwickelt werden, die den Dünger charakterisieren, um den Zentrifugalstreuer für ein gewünschtes Arbeitsergebnis einzustellen. Weiterhin steigt auch der Anspruch an die Genauigkeit der Methoden. In der Praxis wird der Zentrifugalstreuer meist anhand von Streutabellen eingestellt. Die Daten für die Streutabellen gilt es möglichst genau zu ermitteln.

In der EP 1 610 112 B1 wird ein Verfahren und eine Vorrichtung, zum Abstreuen eines Zentrifugalstreuers beschrieben, so dass im Anschluss des Streuversuches für den getesteten Dünger Einstelldaten vorliegen, aufgrund derer ein Zentrifugalstreuer so eingestellt werden kann, dass dieser für eine geforderte Arbeitsbreite eine gute Düngerverteilung auf dem Feld aufweist. Bei dem Verfahren wird der gesamte Zentrifugalstreuer stationär in einer Streuhalle um die Hochachse des sich im Einsatz befindlichen Streutellers gedreht. Dies erfordert ein relativ aufwendiges Drehgestell, in welches der Zentrifugalstreuer eingehängt bzw. an welches er angekuppelt werden muss. Bei der Drehung des Zentrifugalstreuers findet ein permanentes Auswiegen des von den Messschalen aufgefangenen Düngers statt. Um einen Bezug zwischen dem Drehwinkel des Zentrifugalstreuers und dem zu diesem Drehwinkel von den Messschalen aufgefangenen Dünger jeder Messschale zu bekommen, wird der Drehwinkel gemessen und dem jeweiligen Wiegewert zugeordnet. Hierzu ist eine aufwendige und schnelle Messsensorik nötig. Des Weiteren ist es für diesen Streuversuch nötig, eine große Menge Dünger zu streuen. Somit ist dieses Verfahren zeit- und kostenintensiv.

Aus der FR 1 513 824 A3 ist ein weiteres Verfahren bekannt, dass anhand einer visuellen Klassifizierung des zu streuenden Düngers, eine Einstellempfehlung für den Zentrifugalstreuer anhand von Streutabellen wiedergibt. Dabei kann die Klassifizierung des zu streuenden Düngers nur durch Abschätzung vorgenommen werden. Die eindeutige Klassifizierung des verwendeten Düngers ist schwierig. Weiterhin begünstigt dieses Verfahren Anwenderfehler bei einer fehlerhaften Einstufung des Düngers.

Die DE 36 04 449 A1 beschreibt ein Verfahren, welches durch Aufstellen von Messgefäßen auf dem zu bestreuendem Feld die Einstellempfehlung für den Zentrifugalstreuer aus der Streutabelle verifizieren soll. Dieses Verfahren ist sehr zeitintensiv und erfordert ein genaues Aufstellen der Messgefäße seitens des Benutzers.

In der WO 95/24823 A1 ist ein so genanntes Minilabor beschrieben, welches den zu streuenden Dünger untersucht. Nach der Untersuchung erfolgt ein Vergleich mit ähnlich beschaffenen Düngern, zu denen Ergebnisse eines in aufwendiger Weise durchgeführten Streuversuches vorliegen. Bei diesem Vergleich wird nach einem gleich beschaffenen Dünger gesucht, um daraufhin eine Einstellempfehlung für den Zentrifugalstreuer zu geben. Sollte es zu dem von dem Minilabor untersuchten Dünger keinen Streuversuch geben, wird auf einen vorliegenden Streuversuch mit einem ähnlich beschaffenen Dünger verwiesen und darauf in korrigierender Form der Zentrifugalstreuer eingestellt. Hierbei kann die richtige Einstellung des Zentrifugalstreuers, um eine gute Düngeverteilung zu erhalten, nur von Fachleuten mit einem speziellen Fachwissen ermittelt werden.

Die DE 41 05 046 A1 beschreibt ein düngercharakterisierendes Verfahren, welches mittels unterschiedlicher Messverfahren, welche in ihrer Reihenfolge und Gesamtheit nicht festgelegt sind. Durch dieses Verfahrens ist es möglich, eine Einstellempfehlung für einen bestimmten Zentrifugalstreuer zu geben. Es ist nicht genau ersichtlich, welche der Messungen nötig sind, um eine Einstellempfehlung für einen Zentrifugalstreuer geben zu können. Es ist erkannt worden, dass die beschriebene Messung des Reibrollenverhaltens mit einem sogenannten Abwurfwinkelmesser in Verbindung mit den beschriebenen Messungen der Reindichte und des Korngrößenspektrums die eindeutigsten Rückschlüsse auf die Streueigenschaften des jeweiligen Düngers liefert, um zu guten Einstellempfehlungen zukommen.

Die DE 19 72 33 59 A1 beschreibt zwei Ausführungsbeispiele, bei denen mittels Prallelementen bzw. von einem Prallelement eine sogenannte Impulskraft gemessen wird. Die Messung erfolgt direkt bei der Ausbringarbeit des Düngers auf dem Feld. Die Prallelemente bzw. das Prallelement sind derart ausgebildet, dass bei einer Messung die Prallelemente bzw. das Prallelement in den Düngerfächer geschwenkt werden bzw. wird. Durch die gemessene Impulskraft soll daraufhin der Zentrifugalstreuer so eingestellt werden, dass eine gute Düngerverteilung auf dem Feld erzielt wird.

Die DE 69 510 998 T2 beschreibt eine geringfügig zum Umfang der Streuscheibe des Zentrifugalstreurs beabstandete angeordnete Pralleinrichtung. Die Pralleinrichtung ist für die Messung einer Auftrefffrequenz der Düngerpartikel vorgesehen. Anhand der gemessenen Auftrefffrequenz ist der Zentrifugalstreuer dahingehend einzustellen, dass eine gute Düngerverteilung auf dem Feld erzielt wird. Dabei wird von der Erkenntnis ausgegangen, dass für eine geforderte Streubreite das Maximum der abgeworfenen Düngerpartikel für diese Streubreite immer an derseben Stelle vorzufinden ist, an der die Düngerpartikel die Streuscheibe verlassen.

Der Erfindung liegt die Aufgabe zugrunde, ein verbessertes Verfahren für das Ermitteln von Einstelldaten für eine gute Düngerverteilung für Zentrifugalstreuer mittels eines lediglich eine kleine Menge zu charakterisierender Düngerpartikel benötigten durch einen vereinfachten Messaufbau und einer schnellen Datenermittlung, zu schaffen.

Diese Aufgabe wird erfindungsgemäß durch ein Verfahren nach dem Anspruch 1 gelöst.

Dabei wird mit der Datenverarbeitungseinrichtung anhand der Messdaten aus dem erfindungsgemäßen Verfahren eine Einstellempfehlung für den Zentrifugalstreuer und für den untersuchten charakterisierten Dünger ermittelt. Hierzu verwendet die Datenverarbeitungseinrichtung in bevorzugter Weise ein sich im Speicher der Datenverarbeitungseinrichtung befindliches Auswerteprogramm, welches tabellenbasiert und/oder auf Basis eines Algorithmuses arbeitet und/oder andere Methoden verwendet, um anhand der Messdaten aus dem Verfahren eine düngerabhängige Einstellempfehlung für den Zentrifugalstreuer zu erstellen. Dabei berücksichtigt die Datenverarbeitungseinrichtung bei der Erstellung der Einstellempfehlung, die jeweiligen Einstellmöglichkeiten des jeweiligen Zentrifugalstreuers.

Infolge dieser Maßnahmen, wird eine schnelle Charakterisierung eines zu streuenden Düngers zur Einstellung eines bestimmten Zentrifugalstreuers, um eine gute Düngerverteilung auf einer Ackerfläche zu bewirken, erreicht. Der Kerngedanke hierbei ist in der Einfachheit des Aufbaus und der Durchführung des Verfahrens. Somit ist es durch Einsatz von Sensoren nicht mehr nötig eine ständige Relativbewegung des Düngerfächers zu der Messeinrichtung durchzuführen und mittels der langgestreckten Messeinrichtung ist die Möglichkeit geschaffen einen Schnitt im Mengenmaximum des Düngerfächers zu messen.

Durch das erfindungsgemäße Verfahren ist die Möglichkeit gegeben, einen radialen Schnitt durch den Düngerfächer zu messen. Durch diese Messung werden für den verwendeten Dünger bezüglich seines Flugverhaltens charakteristische Daten erfasst. Dies lässt sich dadurch erreichen, dass die Düngerpartikel von den Wurfschaufeln über eine längere, als langgestreckte Messeinrichtung ausgebildete und lückenlos aneinander angeordnete Auffangschalen, denen die Wiegeeinheiten zugeordnet sind, aufweist, abgeschleudert werden.

Mit diesem Verfahren ist es möglich, eine Ableitung der mittleren Düngerverteilung über die Wurfweite und Arbeitsbreite vorzunehmen. Dadurch kann die Düngerverteilung auf der Ackerfläche wiedergegeben werden. Dies wird dadurch erreicht, dass die Menge der von jeder Auffangschale aufgefangenen Düngerpartikel mit der zugehörigen Wurfweite auf Basis der Messdaten der Wiegeeinheiten durch die Datenverarbeitungseinrichtung ermittelt und daraus zusätzlich eine Ermittlung der mittleren Düngerpartikelverteilung über die Wurfweite und Arbeitsbreite mittels der Datenverarbeitungseinrichtung vorgenommen wird.

Dieses Verfahren beinhaltet die Möglichkeit des Erfassens der Flugrichtung des Düngers mittels berührungslos arbeitender Sensoren. Hierdurch entsteht ein Vorteil zu Methoden bei denen zur Erfassung der Flugrichtung der Dünger berührt wird. Durch das bereichsweise Abtasten des Düngers wird kein verfälschtes Ergebnis erzeugt. In vorteilhafter Weise sind die berührungslos arbeitenden Sensoren im Abstand zu den umlaufenden äußeren Enden der die Düngerpartikel abschleudernden Wurfschaufeln angebrachten Sensoren die abgeworfenen Düngerpartikel des Düngerfächers an mehr als zwei voneinander beabstandeten Stellen erfassen, angeordnet.

Durch eine vorteilhafte Bereichsmessung des Düngerfächers kann eine umfangreiche Aussage über diesen Düngerfächer getroffen werden. Dies lässt sich dadurch erreichen, dass ein Sensorelement derart angebracht und/oder ausgerichtet ist, dass der Düngerfächer vorzugsweise im Bereich der maximalen Verteilungsdichte erfasst wird.

Mittels weiterer vorteilhaften Bereichsmessungen des Düngerfächers kann eine noch genauere Aussage über diesen Düngerfächer getroffen werden. Dies lässt sich dadurch erreichen, dass zumindest ein Sensor zum Erfassen zumindest annähernd mittig zwischen dem Mengenmaximum des Düngerfächers und dem Ende des Düngerfächers und zumindest ein weiterer Sensor zumindest annähernd mittig zwischen dem Mengenmaximum des Düngerfächers und dem Anfang des Düngerfächers angebracht sind.

Mittels geschickt eingesetzter Sensoren kann ein Dünger bezüglich seiner Streueigenschaften noch besser charakterisiert werden. Dies lässt sich dadurch erreichen, dass die Sensoren mindestens einen Abwurfwinkel der abgeworfenen Düngerpartikel und/oder die entsprechende Menge der Düngerpartikel zu dem Abwurfwinkel und/oder die Geschwindigkeit der abgeworfenen Düngerpartikel erfassen und diese an die Datenverarbeitungseinrichtung übertragen.

Um eine schnelle Einstellempfehlung für eine gute Düngerverteilung für einen bestimmten Zentrifugaldünger geben zu können, ist vorgesehen, dass die Datenverarbeitungseinrichtung aufgrund des gemessenen Abwurfwinkels und der gemessenen Wurfweite an den untersuchten Düngerpartikeln Einstelldaten für eine Streuempfehlung über die maximal mögliche Arbeitsbreite und/oder eine vorgegebene Arbeitsbreite für die untersuchten Düngerpartikel für einen Zentrifugalstreuer ermittelt.

Das erfindungsgemäße Verfahren stellt ein Ressourcen sparendes Verfahren da, weil die Charakterisierung eines Düngers mit einer geringen Menge an Dünger und dadurch in einer kurzen Zeit durchgeführt werden kann. Dies lässt sich dadurch erreichen, dass mit einer verhältnismäßig geringen Menge von Düngerpartikel, beispielsweise 1,5 Liter, zumindest eine relevante Eigenschaft in Bezug auf das Einstellen von Zentrifugalstreuern ermittelt wird.

Weitere Einzelheiten der Erfindung sind der Beispielsbeschreibung zu entnehmen. Die Zeichnungen zeigen,
- Fig. 1: ein beim erfindungsgemäßen Verfahren zum Einsatz kommender Prüfstand mit einem entsprechend ausgebildeten Düngerfächer in Teilansicht, Prinzipdarstellung und perspektivischer Darstellungsweise.
- Fig. 2: den Prüfstand in Prinzipdarstellung und Seitenansicht,
- Fig. 3: eine Draufsicht von der Ebene der Schleuderscheibe auf den Prüfstand,
- Fig. 4: ein kartesisches Koordinatensystem mit Teilen des Prüfstands und einem ausgebildeten Düngerfächer,
- Fig. 5: ein kartesisches Koordinatensystem mit Teilen des Prüfstands und einer anderen Lage des Düngerfächer im Vergleich zu Fig.4,
- Fig. 6: eine vergrößerte Darstellung des Düngerfächers nach Fig.5,
- Fig. 7: eine weitere vergrößerte Darstellung des Düngerfächers nach Fig.5 und
- Fig. 8: eine weitere vergrößerte Darstellung des Düngerfächers nach Fig.5.

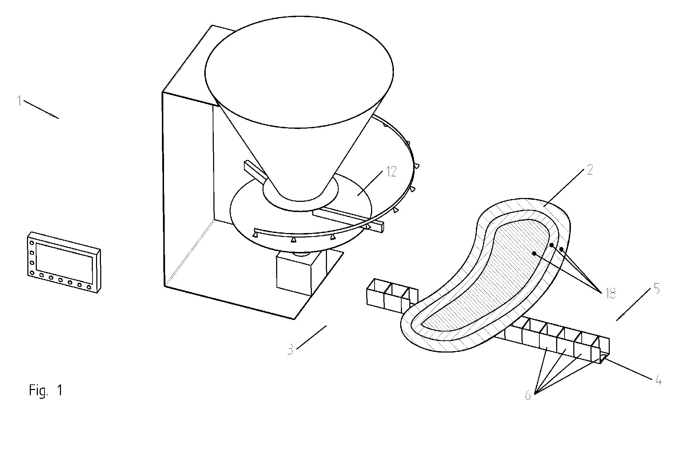

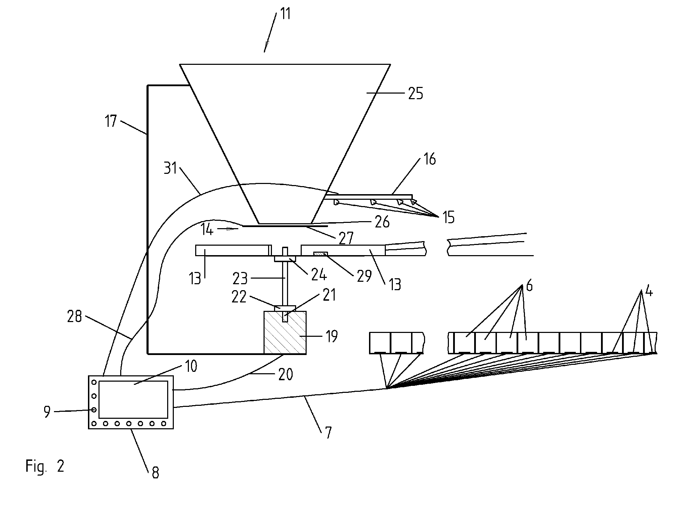

Die Fig. 1 und 2 zeigt einen Prüfstand 1 für das Durchführen des Verfahrens zur Ermitteln von Einstelldaten für die Düngerpartikel eines Düngers in einem Düngerfächer 2 abwerfenden Zentrifugalstreuer. Der Prüfstand 1 ist auf einem ebenen Untergrund 3 angeordnet. Der Prüfstand 1 weist eine auf dem ebenen Untergrund 3 befindliche Wiegeeinheiten 4 aufweisende längere Messeinrichtung 5 auf. Dabei ist die längere Messeinrichtung 5 als eine langgestreckte, Wiegeeinheiten 4 aufweisende Messeinrichtung 5 ausgebildet. Die langgestreckte Messeinrichtung 5 weist mehrere lückenlos aneinandergereihte Auffangschalen 6 auf. Dabei sind die Auffangschalen 6 zum Untergrund 3 hin trichterförmig verjüngend ausgebildet. Jede Auffangschale 6 verfügt an ihrem verjüngten unteren Bereich über die Wiegeeinheit 4. Jede Wiegeeinheit 4 wiegt die von der jeweiligen Auffangschale 6 aufgefangenen Düngerpartikel. Jede Wiegeeinheit 4 ist über eine Datenübertragungseinheit 7 mit einer Datenverarbeitungseinrichtung 8 verbunden, um deren Messdaten an die Datenverarbeitungseinrichtung 8 zu übertragen. Der Prüfstand 1 beinhaltet die angesprochene Datenverarbeitungseinrichtung 8. Der Datenverarbeitungseinrichtung 8 sind eine Bedieneinheit 9 und eine grafische Anzeigefläche 10 zugeordnet. Die Datenverarbeitungseinrichtung 8 kann räumlich beabstandet und/oder lokal getrennt von den anderen Teilen des Prüfstands 1 angeordnet sein. Sie wird im weiteren Verlauf noch näher beschrieben.

Der Prüfstand 1 verfügt über eine Prüfvorrichtung 11, die entweder ein kompletter Zentrifugalstreuer oder Teile davon sind. Die Prüfvorrichtung 11 besteht mindestens aus einer Schleuderscheibe 12 mit mindestens zwei Wurfschaufeln 13 und zumindest einem zugeordneten Dosierorgan 14. Der zu untersuchende Dünger wird in Form eines Düngerfächers 2 in breitwürfiger Weise oberhalb der Auffangschalen 6 des Prüfstandes 1 verteilt und im Bereich der Auffangschalen 6 von diesen aufgefangen. Die Verteilung des Düngers wird durch die Schleuderscheibe 12 und die Wurfschaufeln 13 vorgenommen. Während des Verteilens des Düngers werden die Düngerpartikel des Düngerfächers 2, von datensendenden berührungslos arbeitenden Sensoren 15 erfasst. Die Sensoren 15 sind an einem halbkreisbildenden Haltebügel 16 befestigt. Der Haltebügel 16 ist derart angeordnet, dass dieser über der Ebene der Schleuderscheibe 12 liegt. Es wäre auch möglich, den Haltebügel 16 unterhalb der Ebene der Schleuderscheibe 12 anzubringen. Entscheidend hierbei ist die Anordnung des Haltebügels 16 und der Sensoren 15 oberhalb des Düngerfächers 2, vorzugsweise beabstandet zu diesem. So ist sichergestellt, dass die Ausbreitung des Düngerfächers 2 nicht gestört wird. Der Haltebügel 16 ist im Ausführungsbeispiel über den Vorratsbehälter des Streuers an einem Gestell 17 befestigt. Für eine bessere Überschaubarkeit ist die Befestigung des Haltebügels 16 an dem Gestell 17 nicht eingezeichnet. Das Gestell 17 sowie die Sensoren 15 werden im weiteren Verlauf noch beschrieben. Dabei ist die Verteilung der Düngerpartikel im Düngerfächer 2 mittels schraffierter Bereiche 18 in schematischer Weise dargestellt. Bei einer dichteren Schraffur befinden sich mehr Düngerpartikel im entsprechenden schraffierten Bereich 18 des Düngerfächers 2 und bei einer weniger dichten Schraffur befinden sich weniger Düngerpartikel im entsprechenden schraffierten Bereich 18 des Düngerfächers 2. Das Verteilen bewirkt eine flächige Verteilung des Düngers auf dem ebenen Untergrund 3. Bei dem Verteilen landet der größere Teil des abgeworfenen Düngers auf dem Untergrund 3 und der Teil des Düngers, der sich direkt oberhalb und über den Auffangschalen 6 befindet, gelangt in die Auffangschalen 6 der langgestreckten Messeinrichtung 5. Der von den Auffangschalen 6 aufgefangene Dünger wird von den Wiegeeinheiten 4 gewogen und die Messdaten der einzelnen Wiegeeinheiten 4 werden in erwähnter Weise an die Datenverarbeitungseinrichtung 8 übertragen. Die flächige Verteilung des Düngers auf dem Untergrund 3 wird mittels des nachstehend beschriebenen erfindungsgemäßen Verfahrens optimiert. Die Optimierung hat zur Folge, dass ein Zentrifugalstreuer beim Ausbringen des mit dem Verfahren untersuchten Düngers auf der Ackerfläche mit den ermittelten eingestellten Einstelldaten aus dem Verfahren eine möglichst gleichmäßige geforderte flächige Verteilung des Düngers auf der Ackerfläche erzielt.

Mittels des Prüfstands 1 und dem beschriebenen Verfahren wird der Dünger mittels der Prüfvorrichtung 11 charakterisiert.

Der Prüfstand 1 verfügt über das an einem Ende der langgestreckten Messeinrichtung 5 aufgestellte Gestell 17. Dabei ist die Messeinrichtung 5 nicht in ihrer vollen Länge abgebildet. Es sind nur das eine Ende der Messeinrichtung 5, an der das Gestell steht, und der Teil der Messeinrichtung 5, auf der der Düngerfächer 2 auftrifft, abgebildet. Das Gestell 17 weist einen motorischen Antrieb 19 auf. Der Antrieb 19 ist am unteren Teil des Gestells 17 nahe dem Untergrund 3 angebracht. Der Antrieb 19 wird über die Datenverarbeitungseinrichtung 8 gesteuert. Die Steuerbefehle für die Steuerung des Antriebs 19 werden mittels einer Datenübertragungseinrichtung 20 an diesen übertragen. Der Antrieb 19 weist eine Ausgangswelle 21 auf. Die Ausgangswelle 21 ist vorzugsweise mittels einer drehstarren Kupplung 22 an einem Ende einer Welle 23 angekuppelt. An dem anderen Ende der Welle 23 ist mittels einer drehstarren Kupplung 24 die Schleuderscheibe 12 drehfest angeordnet. Dabei dient der Antrieb 19 dazu, die Schleuderscheibe 12 über die Welle 23 in Rotation zu versetzen. Der motorische Antrieb 19 weist die Möglichkeit auf, die Schleuderscheibe 12 mit einer vorgegebenen Drehzahl anzutreiben.

Oberhalb der Schleuderscheibe 12 ist ein Vorratsbehälter 25, welcher an dem Gestell 17 befestigt ist, angebracht. Der Vorratsbehälter 25 dient dazu, den zu prüfenden Dünger aufzunehmen. Dabei kann die Menge des zu prüfenden Düngers beispielsweise 1,5 Liter sein. Dem Vorratsbehälter 25 ist oberhalb der Schleuderscheibe 12 ein einstellbares Dosierorgan 14 zugeordnet. Dieses Dosierorgan 14 weist einen mit einer Dosieröffnung 26 zusammenwirkenden Schieber 27 auf. Der Schieber 27 wird beispielsweise mit einem nicht eingezeichneten elektrischen oder hydraulischen Betätigungselement betätigt. Mittels des Schiebers 27 wird die Dosieröffnung 26 verschlossen oder freigegeben. Das Betätigungssignal für das Betätigungselement, um den Schieber 27 zu betätigen, erfolgt über die der Datenverarbeitungseinrichtung 8 zugeordneten Bedieneinheit 9. Für die Kommunikation zwischen Datenverarbeitungseinrichtung 8 und Dosierorgan 14 ist eine Datenübertragungseinheit 28 vorhanden. Bei der Betätigung des Betätigungselementes gibt der Schieber eine Menge des sich im Vorratsbehälter 25 befindlichen Düngers in einem ersten Streuvorgang auf die rotierende Schleuderscheibe 12 über die Dosieröffnung 26 frei. Bei der Freigabe des Düngers fällt die zu dosierende Düngermenge auf die Schleuderscheibe 12.

Die Lage der Aufgabefläche 29, auf die der Dünger von dem Dosierorgan 14 kommend auf die Schleuderscheibe 12 fällt, kann in bekannter Weise verändert werden. Dabei ist bei dem ersten Streuvorgang die Aufgabefläche 29 der Düngerpartikel auf der Schleuderscheibe 12 so gewählt, dass die Düngerpartikel ungefähr in Richtung der Messeinrichtung 5 abgeschleudert werden. Der Einfluss auf den Düngerfächer 2 bei einer solchen Veränderung der Aufgabefläche 29 wird im weiteren Verlauf noch beschrieben. Auch wäre es möglich, die Position des Gestells 17 mit den an dem Gestell 17 angebrachten Teilen zu der langgestreckten Messeinrichtung 5 zu verändern, anstatt die Aufgabefläche 29 auf der Schleuderscheibe 12 zu verändern.

Bei dem Auftreffen des Düngers auf die rotierende Schleuderscheibe 12 werden die Düngerpartikel des Düngers oberhalb des Untergrunds 3 in Form eines Düngerfächers 2 in breitwürfiger Weise verteilt. Dabei wird der Düngerfächer 2 durch die am Haltebügel 16 befestigten berührungslos arbeitenden Sensoren 15 erfasst. Die Sensoren 15 übermitteln die entsprechenden Messdaten an die Datenverarbeitungseinrichtung 8.

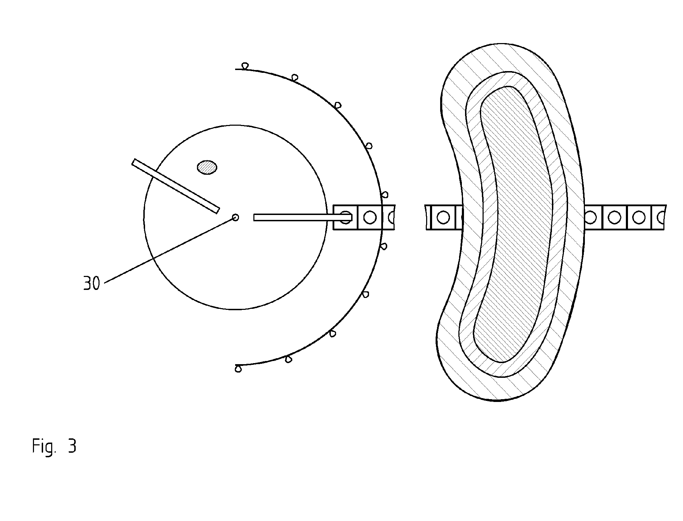

In Fig. 3 ist in Draufsicht die Schleuderscheibe 12 mit ihrer Hochachse 30 mit den auf ihr befestigten Wurfschaufeln 13 dargestellt. Zusätzlich ist die Aufgabefläche 29 des Düngers auf der Schleuderscheibe 12 eingezeichnet. Dabei ist die Aufgabefläche 29 des Düngers auf die Schleuderscheibe 12 als eine schraffierte ovale Fläche eingezeichnet. Weiterhin ist der Haltebügel 16 mit den auf ihm befestigten Sensoren 15, die auf den oberhalb des über der Messeinrichtung 5 abgebildeten Düngerfächers 2 gerichtet sind, dargestellt. Dabei ist, wie schon erwähnt, die Verteilung der Düngerpartikel im Düngerfächer 2 mittels schraffierter Bereiche 18 eingezeichnet. Weniger eng schraffierte Stellen weisen weniger und enger schraffierte Stellen weisen mehr Düngerpartikel pro Flächen und/oder Raumeinheit auf. Die Sensoren 15 sind derart an dem Haltebügel 16 befestigt, dass die Sensoren 15 beabstandet zu dem Düngerfächer 2 geordnet und auf diesen ausgerichtet sind. Weiterhin ist zumindest ein Sensor 15 derart ausgerichtet, dass dieser den Düngerfächer 2 annähernd im Bereich des Mengenmaximums der Düngerverteilung in dem Düngerfächer 2 erfasst. Zusätzlich sind jeweils ein Sensor 15 annähernd mittig zwischen dem Mengenmaximum der Düngerverteilung in dem Düngerfächer 2 und dem Anfang des Düngerfächers 2 und ein weiterer Sensor 15 annähernd mittig zwischen dem Mengenmaximum der Düngerverteilung im Düngerfächer 2 und dem Ende des Düngerfächers 2 angebracht. An welcher Stelle sich der Anfang bzw. das Ende des Düngerfächers 2 befindet, wird im späteren Verlauf noch beschrieben. Die Ausrichtung der Sensoren 15 ist so gewählt, dass die Sensoren 15 die Flugbahn der Düngerpartikel im Düngerfächer 2 erfassen. Die Sensoren 15 messen vorrangig die Geschwindigkeit, die Menge und den Abwurfwinkel der einzelnen Düngerpartikeln. Dabei werden auch die einzelnen Mengen der Düngerpartikel über den Abwurfwinkel gemessen. Die Sensoren 15 sind mittels einer Datenübertragungseinheit 31 für das Übertragen von Messdaten mit der Datenverarbeitungseinrichtung 8 verbunden.

Bei dem hier beschriebenen Prüfstand 1 werden als Radarsensoren ausgebildete Sensoren 15 verwendet. Es können aber auch andere Arten von Sensoren 15 verwendet werden, die dazu geeignet sind, die Geschwindigkeit, die Menge und den Abwurfwinkel der einzelnen Düngerpartikel im Düngerfächer 2 zu messen. Weiterhin sind die Radarsensoren so ausgerichtet, dass diese nicht senkrecht auf den Düngerfächer 2 gerichtet sind. Diese Ausrichtungseinschränkung ist durch das Funktionsprinzip der Radarsensoren vorgegeben. Jeder Sensor 15 weist eine Sende- und Empfangseinheit auf. Die Sendeeinheit sendet elektromagnetische Wellen aus. Durch die beschriebene Ausrichtung des jeweiligen Sensors 15 treffen die elektromagnetischen Wellen auf die Düngerpartikel im Düngerfächer 2 und werden von diesen reflektiert. Somit werden elektromagnetische Wellen, die in Richtung der Empfangseinheit reflektiert werden, von der Empfangseinheit erfasst. Der Schieber 27 verschließt die dem Dosierorgan 14 zugeordnete Dosieröffnung 26 nachdem die festgelegte Menge Dünger durch die reflektierten elektromagnetischen Wellen von der Empfangseinheit und somit ausreichende Messdaten für die Berechnung der Düngerverteilung erfasst worden sind.

Die von den Sensoren 15 entsprechend den reflektierten Wellen von den Düngerpartikeln erfassten Messdaten werden mittels der Datenübertragungseinheit 31 an die Datenverarbeitungseinrichtung 8 übertragen.

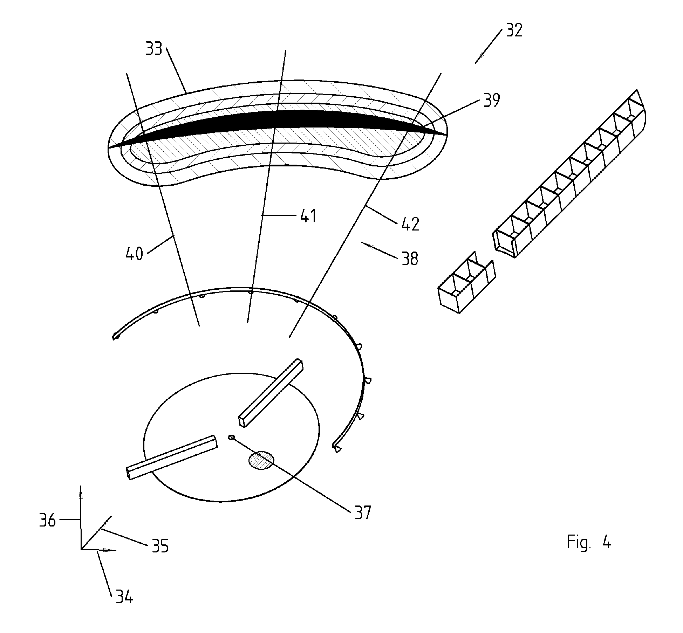

Die Datenverarbeitungseinrichtung 8 erstellt daraufhin auf Basis der Messdaten der Sensoren 15 das in Fig. 4 dargestellte Diagramm 32 und visualisiert die Düngerflächenverteilung 33 auf der grafischen Anzeigefläche 10. Zu der eingezeichneten Düngerflächenverteilung 33 ist nach dem ersten Streuversuch lediglich die Querverteilung der Düngerpartikel bekannt.

Das Diagramm 32 gemäß Fig. 4 weist ein dreidimensionales kartesisches Koordinatensystem auf. Die Skalierung der X-Achse 34 und der Y-Achse 35 des Koordinatensystems ist 1[eins] und die Einheit ist Meter. Die Skalierung der Z-Achse 36 ist 1 [eins] und die Einheit ist Gramm. Die X-Achse 34 des Koordinatensystems stellt die Breite des Untergrunds 3 dar, über die der Dünger abgeworfen wird. Die Y-Achse 35 des Koordinatensystems stellt die Länge des Untergrunds 3 dar, über die der Dünger abgeworfen wird. Die Z-Achse 36 ordnet die Menge des Düngers ein, die an der jeweiligen Stelle auf dem Untergrund 3 gelandet ist. Die Z-Achse 36 wird ausschließlich für die Einordnung der Düngerflächenverteilung 33 verwendet und nicht für die räumliche Einordnung des Prüfstands 1. Der Ursprung 37 des Koordinatensystems ist im Punkt X=0, Y=0. Im Ursprung 37 liegt die Hochachse 30 der eingezeichneten Schleuderscheibe 12 mit den auf Ihr befindlichen Wurfschaufeln 13. Weiterhin ist die Aufgabefläche 29 des Düngers auf der Schleuderscheibe 12 zu der in dem Diagramm 32 gezeigten Düngerflächenverteilung 33 eingezeichnet.

Zur besseren Darstellung und Beschreibung ist in Fig. 4, die gesamte Düngerflächenverteilung 33 eingezeichnet. Bei dem ersten Streuvorgang kann aber nur eine Aussage über die Querverteilung der Düngerflächenverteilung 33 gegeben werden, und nicht, wie eingezeichnet, die gesamte Düngerflächenverteilung 33. Dabei ist die Düngerflächenverteilung 33 nach demselben Schema schraffiert wie in den Fig. 1-3.

Über die Düngerflächenverteilung 33 ist für eine bessere Beurteilung und Beschreibung ein Raster 38 gelegt. Der Aufbau des Rasters 38 wird im späteren Verlauf beschrieben.

Die langgestreckte Messeinrichtung 5 erstreckt sich in positiver Y-Richtung und in X-Richtung gleich 0 und ist in dem Diagramm 32 mittels der aneinandergereihten Auffangschalen 6 eingezeichnet. In dem Diagramm 32 ist zusätzlich der Haltebügel 16 mit den an ihm befestigten Sensoren 15 eingezeichnet.

Für eine bessere Beschreibung beinhaltet die Z-Achse 36 eine bogenförmige Erhebung 39. Die bogenförmige Erhebung 39 stellt die Düngerflächenverteilung 33 an dem Ort, an dem sie eingezeichnet ist, dar. Die bogenförmige Erhebung 39 hat einen annähernd radial unveränderlichen Abstand zu dem Ursprung 37 des Koordinatensystems mit den beiden Endpunkten auf der Flächengrenze der eingezeichneten Düngerflächenverteilung 33 in der der Dünger gelandet ist. Die bogenförmige Erhebung 39 ist für die Darstellung so gewählt, dass sie jeweils das Maximum in Z-Richtung aufweist. Die bogenförmige Erhebung 39 dient zur Charakterisierung der Querverteilung der Düngerflächenverteilung 33.

Das über die Düngerflächenverteilung 33 gelegte Raster 38 ist wie folgt aufgebaut:

Der Anfang des auf dem Untergrund 3 verteilten, aus Düngerpartikeln bestehenden Düngerflächenverteilung 33, ist an der Stelle, an der das erste Düngerpartikel auf dem Untergrund 3 gelandet ist. In dem hier dargestellten Diagramm 32 beginnt die Düngerflächenverteilung 33 linksseitig von der ersten als Linie 40 ausgebildeten Unterteilung.

Die erste als Linie 40 ausgebildete Unterteilung ist so gewählt, dass die Düngerpartikel, die sich linksseitig von der Unterteilung befinden, 5% der abgeworfenen Düngerpartikelmenge darstellen.

Eine zweite als Linie 41 ausgebildete Unterteilung befindet sich rechtsseitig von der ersten als Linie 40 ausgebildeten Unterteilung. Die zweite Unterteilung ist so gewählt, dass die Düngerpartikel, die sich linksseitig von der zweiten als Linie 41 ausgebildeten Unterteilung befinden, 50% der abgeworfenen Düngerpartikelmenge bilden. Dementsprechend bilden auch die rechtsseitig von der zweiten als Linie 41 ausgebildeten Unterteilung gelandeten Düngerpartikel 50% des abgeworfenen Düngers.

Eine dritte als Linie 42 ausgebildete Unterteilung befindet sich rechtsseitig von der zweiten als Linie 41 ausgebildeten Unterteilung. Die dritte Unterteilung ist so gewählt, dass die Düngerpartikel, die sich linksseitig von der dritten Unterteilung befinden, 95% der abgeworfenen Düngerpartikelmenge darstellen.

Nach dem ersten Streuvorgang ermittelt die Datenverarbeitungseinrichtung 8 anhand der übertragenen Messdaten der Sensoren 15 wie die Lage der Aufgabefläche 29, auf die der Dünger auf der Schleuderscheibe 12 auftrifft, für einen zweiten Streuvorgang verändert werden muss und leitet die Veränderung der Aufgabefläche 29 durch das einstellbare Dosierorgan 14 ein. Die Veränderung der Aufgabefläche 29 wird in der Weise vorgenommen, dass das Mengenmaximum des Düngerfächers 2 sich im Bereich der langgestreckten Messeinrichtung 5 befindet. Dies wird dadurch erreicht, dass die Veränderung der Aufgabefläche 29 so vorgenommen wird, dass die Aufgabefläche 29 der Düngerpartikel auf die Schleuderscheibe 12 relativ zur Schleuderscheibe 12 gedreht wird. Dieser Zusammenhang wird im weiteren Verlauf noch erläutert. Das Dosierorgan 14 verändert die Position der Aufgabefläche 29 des Düngers auf der Schleuderscheibe 12 anhand des Rechnerbefehls. Es ist auch denkbar, dass die Veränderung der Aufgabefläche 29 auf der Streuscheibe manuell, anhand von ausgegebenen Werten auf der grafischen Anzeigefläche 10, vorgenommen wird.

Nachdem die Lage der Aufgabefläche 29 des Düngers auf die Schleuderscheibe 12 eingestellt ist, wird der Schieber 27 über die Datenverarbeitungseinrichtung 8 erneut für den zweiten Streuvorgang betätigt. Bei der Betätigung des Schiebers 27 für die Freigabe der Dosieröffnung 26 wird eine weitere Menge des sich noch im Vorratsbehälter 25 befindlichen Dünger auf die rotierende Schleuderscheibe 12 gegeben.

Von der rotierenden Schleuderscheibe 12 wird der Dünger mittels der Wurfschaufeln 13 oberhalb des Untergrunds 3 in Richtung der langgestreckten Messeinrichtung 5 geworfen. Bei dem Schleudern des Düngers erfassen die Sensoren 15 den Düngerfächer 2 in beschriebener Weise und übermitteln die hierbei erfassten Messdaten in beschriebener Weise an die Datenverarbeitungseinrichtung 8. Dabei wird, wie eingangs beschrieben, der Teil des Düngers, der sich direkt oberhalb der Auffangschalen 6 befindet, von den Auffangschalen 6 der langgestreckten Messeinrichtung 5 aufgefangen. Der von den Auffangschalen 6 aufgefangene Dünger wird in beschriebener Weise von den Wiegeeinheiten 4 gewogen, dabei werden die Messdaten der einzelnen Wiegeeinheiten 4 in beschriebener Weise an die Datenverarbeitungseinrichtung 8 übertragen. Die Datenverarbeitungseinrichtung 8 ermittelt zu jeder von den Auffangschalen 6 aufgefangenen Düngerpartikelmengen die jeweilige zugehörige Wurfweite.

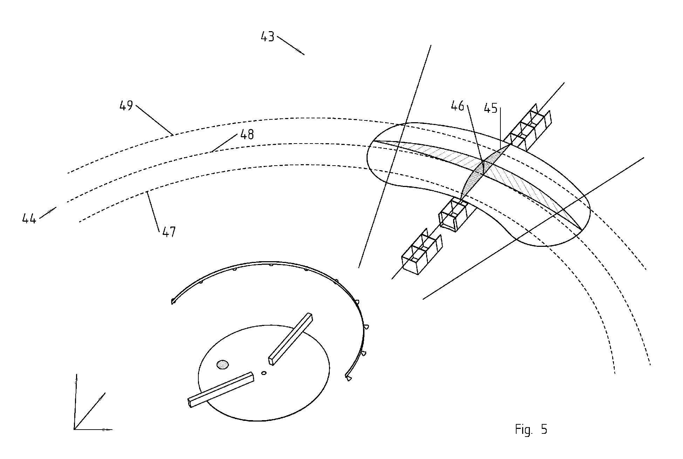

Die Datenverarbeitungseinrichtung 8 erstellt anhand der Messdaten der einzelnen Wiegeeinheiten 4 und den Messdaten der Sensoren 15 ein weiteres Diagramm 43 mit der Düngerflächenverteilung 33 des Düngers auf dem Untergrund 3 und visualisiert die Düngerflächenverteilung 33 mittels der grafischen Anzeigefläche 10. Dieses Diagramm 43 ist in Fig. 5. dargestellt.

Das Diagramm 43 ist von dem Aufbau gleich mit dem Diagramm 32 nach Fig. 4. Weiterhin ist die verlagerte Aufgabefläche 29 des Düngers auf der Schleuderscheibe 12 mit der hierbei entstanden Düngerflächenverteilung 33 zu dieser Aufgabefläche 29 eingezeichnet. Über die Düngerflächenverteilung 33 ist für eine bessere Beurteilung und Beschreibung eine zusätzliche Rasterung 44 gelegt. Der Aufbau der zusätzlichen Rasterung 44 wird im späteren Verlauf beschrieben.

Die Düngerflächenverteilung 33 auf dem Untergrund 3 wird nach einem bekannten Nährungsverfahren hinreichend genau erstellt und ist in dem Diagramm 43 abgebildet. Das Nährungsverfahren berücksichtigt den Abwurfwinkel und die mittlere Wurfweite des untersuchten Düngers. Der Abwurfwinkel wird mittels der Sensoren 15 erfasst. Die mittlere Wurfweite berechnet die Datenverarbeitungseinrichtung 8 anhand der Messdaten der einzelnen Wiegeeinheiten 4 mittels eines in der Datenverarbeitungseinrichtung 8 befindlichen Auswerteprogrammes.

Dadurch, dass bei dem zweiten Streuvorgang das Mengenmaximum des Düngerfächers 2 im Bereich der langgestreckten Messeinrichtung 5 ist, wird zusätzlich zu der Querverteilung des Düngerfächers 2 auch die Längsverteilung und Wurfweite der einzelnen Düngerpartikelmengen des Düngerfächers 2 ermittelt.

Für eine bessere Darstellung beinhaltet die Z-Achse 36 eine zweite bogenförmige Erhebung 45. Die bogenförmige Erhebung 45 stellt dabei die Düngerflächenverteilung 33 an dem Ort, an dem sie eingezeichnet ist, dar. Die beiden bogenförmigen Erhebungen 39/45 weisen jeweils, um sie besser auseinander zu halten, unterschiedlich eng eingezeichnete Schraffuren auf. Die zweite bogenförmige Erhebung 45 hat eine unveränderliche X-Koordinate mit den beiden Endpunkten auf der Flächengrenze der eingezeichneten Düngerflächenverteilung 33 in der der Dünger gelandet ist. Die bogenförmige Erhebung 45 ist für die Darstellung so gewählt, dass sie jeweils das Maximum in z-Richtung aufweist. Zu sehen ist, dass die Maxima der beiden bogenförmigen Erhebungen 39/45 an der gleichen Stelle im Koordinatensystem sind. Die zweite bodenförmige Erhebung 45 charakterisiert die Längsverteilung der Düngerflächenverteilung 33. Die nicht dargestellte Verteilung des Düngers in Z-Richtung ist derart ausgebildet, dass sie sich, im Vergleich zu den eingezeichneten bogenförmigen Erhebungen 39/45, in abflachender Weise zu den Flächengrenzen der eingezeichneten Düngerflächenverteilung 33, in der der Dünger gelandet ist, hin erstreckt.

Die über die Düngerflächenverteilung 33 gelegte Rasterung 44, ist wie folgt aufgebaut:

Es sind drei nicht komplett eingezeichnete Kreise 47/48/49/ um den Ursprung 37 des Koordinatensystems geschlagen. Dabei sind die Kreisumfangsbögen der Kreise 47/48/49 gestrichelt dargestellt. Der erste Kreis 47 ist so gelegt, dass innerhalb des Kreises 47 5% der abgeworfenen Düngerpartikel sind und 95% der abgeworfenen Düngerpartikel außerhalb des Kreises 47 sind. Der zweite Kreis 48 ist so gelegt, dass innerhalb 50% der abgeworfenen Düngerpartikel sind und 50% der abgeworfenen Düngerpartikel außerhalb des Kreises 48 sind. Der dritte Kreis 48 ist so gelegt, dass innerhalb 95% der abgeworfenen Düngerpartikel sind und 5% der abgeworfenen Düngerpartikel außerhalb des Kreises 48 sind.

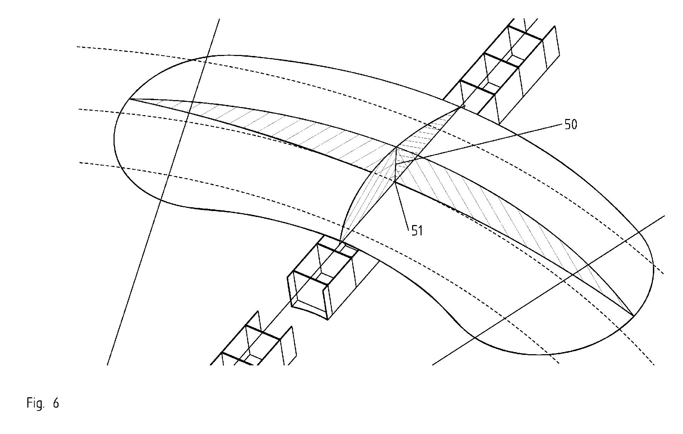

Fig. 6 zeigt eine vergrößerte Darstellung der Düngerflächenverteilung 33 mit den beiden bogenförmigen Erhebungen 39/45, des Rasters 38, der Rasterung 44 und einem Teil der Messeinrichtung 5. Die bogenförmige Erhebung 39, die die Querverteilung an der Stelle zeigt, an der sie eingezeichnet ist, weist eine Spiegelachse 50 auf. Die Spiegelachse 50 ist die Verbindungslinie von der Stelle 46 der Maxima der beiden eingezeichneten bogenförmigen Erhebungen 39/45 mit dem Schnittpunkt 51 von der zweiten als Linie 41 ausgebildeten Unterteilung mit dem dritten Kreis 48, in dessen inneren Bereich 50% des abgeworfenen Düngers liegen. Die Schraffur die links- bzw. rechtsseitig von der Spiegelachse 50 liegt ist von der Größer her gleich. Somit ist auch die Menge der Düngerpartikel links- und rechtsseitig gleich. Die bogenförmige Erhebung 45, die die Längsverteilung an der Stelle zeigt, an der sie eingezeichnet ist, weist die selbe Spiegelachse 50, wie die Spiegelachse 50 der bogenförmigen Erhebung 39 die die Querverteilung an der Stelle zeigt, an der sie eingezeichnet ist, auf. Der Teil der Schraffur der von der Spiegelachse 50 zur Prüfvorrichtung 11 zeigt, ist von der Größe her gleich mit dem Teil der Schraffur der von der Spiegelachse 50 von der Prüfvorrichtung 11 weg zeigt. Somit ist auch die Menge der Düngerpartikel von der Spiegelachse 50 zur Prüfvorrichtung 11 gleich der Menge der Spiegelachse 50 von der Prüfvorrichtung 11 weg.

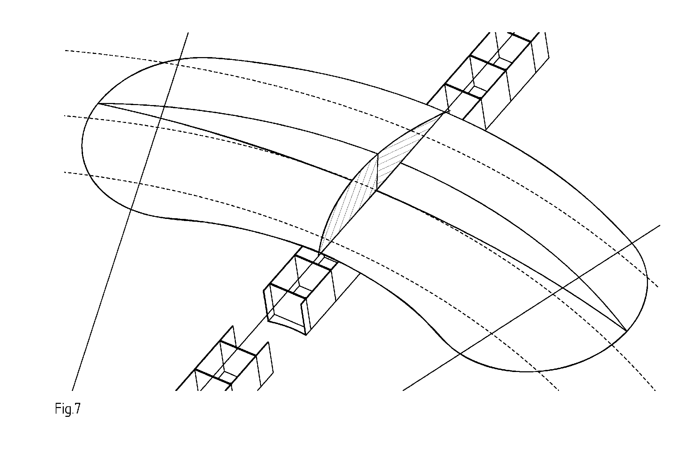

Für eine eindeutigere Darstellung der bogenförmigen Erhebungen 39/45 ist in Fig. 7 nur die Schraffur der bogenförmigen Erhebung 39, die die Querverteilung an der Stelle zeigt, an der sie eingezeichnet ist, dargestellt.

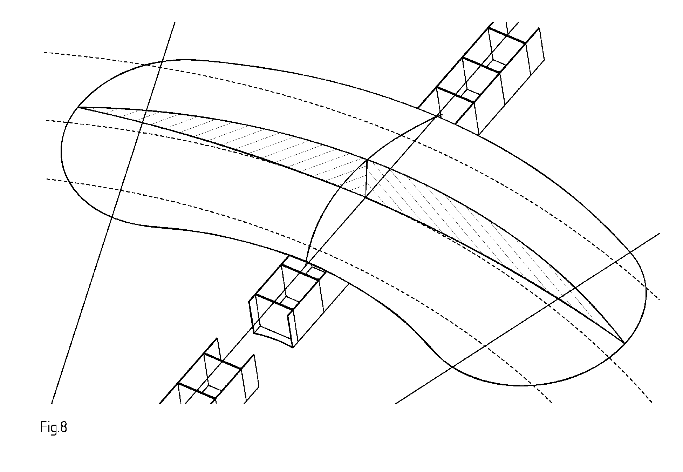

Für eine eindeutigere Darstellung der bogenförmigen Erhebungen 39/45 ist in Fig. 8 nur die Schraffur der bogenförmigen Erhebung 45, die die Längsverteilung an der Stelle zeigt, an der sie eingezeichnet ist, dargestellt.

Aufgrund der ermittelten Wurfweite des Düngers durch das Auffangen des Düngers in den Auffangschalen 6, des von den Sensoren 15 ermittelten Abwurfwinkels des Düngers, der Vorgabe der gewünschten Arbeitsbreite oder der mit dem Dünger maximal möglichen Arbeitsbreite und des erstellten Diagramms 43, wird mittels eines sich in dem Speicher der Datenverarbeitungseinrichtung 8 abgespeicherten Algorithmusses eine Einstellempfehlung für den Zentrifugalstreuer erstellt. Die Einstellempfehlung wird auf der grafischen Anzeigefläche 10 dargestellt.

Die Einstellempfehlung für den Zentrifugalstreuer gibt eine Einstellung für den jeweiligen Zentrifugalstreuer wieder. Dabei ist die Einstellempfehlung für die Einstellung vorhandener Einstellmöglichkeiten optimiert. Die Einstellempfehlung ist, wie eingangs beschrieben, dazu da, eine gleichmäßige Düngerverteilung unter Vorgabe der gewünschten Arbeitsbreite bzw. der maximal mit dem verwendeten Dünger mögliche Arbeitsbreite auf dem Feld zu erreichen.

Die Düngerflächenverteilung 33, des Diagramms 32, die vor der Einstellung des Dosierorgans 14 entsteht, damit die Aufgabefläche 29 der Düngerpartikel so gewählt ist, dass daraufhin das Mengenmaximum der Düngerflächenverteilung 33 sich in dem Bereich der langgestreckten Messeinrichtung 5 befindet, ist in dem Diagramm 43 gemäß Fig. 5 dargestellt. Weiterhin ist die dazugehörige Lage der Aufgabefläche 29 des Düngers, zu diesem Diagramm 43, auf der Schleuderscheibe 12 eingezeichnet. Das Diagramm 43 ist bis auf eine gedrehte Lage der Düngerflächenverteilung 33 des Düngers auf dem Untergrund 3 und die daraus resultierenden Verschiebung des Rasters 38 und einer zusätzlichen Rasterung 44, identisch mit dem Diagramm 32 gemäß Fig. 4.

Die Düngerflächenverteilung 33 gemäß Fig.4 im Vergleich zu der Düngerflächenverteilung 33 gemäß Fig. 5 ist lediglich von der Lage eine Andere. Die Form der Düngerflächenverteilungen 33 gemäß Fig. 4 und Fig. 5 ist identisch.

Bei einer Veränderung der Aufgabefläche 29 des Düngers auf der Schleuderscheibe 12, bei einem gleichbleibenden Abstand der Aufgabefläche 29 zur Drehachse der Schleuderscheibe 12, bleibt die Form der Düngerflächenverteilung 33 auf dem Untergrund 3 gleich.

Es findet bei gleichbleibender Form der Düngerflächenverteilung 33 auf dem Untergrund 3 ausschließlich eine Drehung der Aufgabefläche 29 auf der Schleuderscheibe 12 in Bezug zur Drehachse der Schleuderscheibe 12 statt. Dabei ist der Drehwinkel zwischen zwei verlagerten Aufgabeflächen 29 der gleiche Drehwinkel, der zwischen den von den Aufgabeflächen 29 ausgehenden und auf dem Untergrund 3 liegenden Düngerflächenverteilungen 33 vorhanden ist.

Nach dem Durchführen des erfindungsgemäßen Verfahrens, wie es in den Merkmalen des Anspruches 1 komprimiert wieder gegeben ist, kann auf die Einstellung für einen Zweischeiben-Zentrifugalstreuer geschlossen werden. Obwohl bei einem Zweischeiben-Zentrifugalstreuer zwei gegenläufig mit Wurfschaufeln 13 angetriebene Schleuderscheiben 12 mit je einem zugeordneten Dosierorgan 14 verwendet werden. Jedoch verwendet das hier beschriebene Verfahren nur eine mit Wurfschaufeln 13 besetzte angetriebene Schleuderscheibe 12, mit einem zugeordneten Dosierorgan 14. Dadurch sind die Düngerflächenverteilungen 33 von dem Verfahren und dem Zweischeiben-Zentrifugalstreuer unterschiedlich.

Die Möglichkeit nicht einen kompletten Zweischeben-Zentrifugalstreuer verwenden zu müssen und dennoch auf die Düngerflächenverteilung 33 schließen zu können, beruht auf der Erkenntnis, dass eine Spiegelachse 50 zwischen den beiden Düngerflächenverteilungen 33 auf dem Untergrund 3 ausgehend von den beiden Schleuderscheiben 12 eines Zweischeiben-Zentrifugalstreuers vorhanden ist. Die Spiegelachse 50 ist die Längsachse des Zweischeiben-Zentrifugalstreuers.

Mit dieser Erkenntnis ist es möglich, lediglich die benötigten Teile eines Zentrifugalstreuers anstatt eines kompletten Zweischeiben-Zentrifugalstreuers für das Verfahren zu benutzen, um auf die Düngerflächenverteilung 33 eines Zweischeiben-Zentrifugalstreuer zu schließen. Somit wird bei dem Verfahren, um vergleichbare Düngerflächenverteilungen 33 zu erhalten, wie bei dem Zwischeiben-Zentrifugalstreuer, die mittels des Verfahrens erzeugte Flächverteilung form- und mengenmäßig, um die Achse, die der Längsache des Zweischeiben-Zentrifugalstreuers entspricht, gespiegelt.

## Patentansprüche

1. Verfahren zur Ermittlung von Einstelldaten eines Zentrifugalstreuers der zwei beabstandet zueinander angeordnete, gegensinnig rotierend angetriebene und mit Wurfschaufeln (13) besetzte Schleuderscheiben (12) aufweist, denen über einstellbare Dosierorgane (14) dosierbar auszubringende Düngerpartikel zugeführt werden und der Mittel für die Beeinflussung der Verteilungsgenauigkeit der Düngerpartikel aufweist und bei dem die zugeführten Düngerpartikeln von seinen Wurfschaufeln (13) in Form eines Düngerfächers (2) verteilt werden, wobei bei dem Verfahren von einer eine Schleuderscheibe mit Wurfschaufeln (13) aufweisenden Prüfvorrichtung (11), der ein Dosierorgan (14) zugeordnet ist, über die Schleuderscheibe (12) der Prüfvorrichtung (11) die Düngerpartikel in Richtung einer Wiegeeinheiten (4) aufweisenden längeren Messeinrichtung (5) abgeschleudert werden, so dass die Messeinrichtung (5) die auf ihr landenden Düngerpartikel auffängt, **gekennzeichnet durch** folgende Verfahrensschritte:
- Schritt 1 Anordnung zumindest einer Schleuderscheibe (12) mit zugeordnetem Dosierorgan (14) an einem Ende der längeren Messeinrichtung (5) in einer zumindest beim Abschleudern der Düngerpartikel unveränderlichen räumlichen Lage gegenüber der Messeinrichtung (5);
- Schritt 2 Anordnung von zumindest zwei berührungslos arbeitenden Sensoren (15) im Abstand zu den äußeren Enden der die Düngerpartikel abschleudernden, rotierend angetriebenen Wurfschaufeln (13) der Schleuderscheibe (12) der Prüfvorrichtung (11) zur Erfassung von Messdaten der von den Wurfschaufeln (13) abgeschleuderten Düngerpartikel;
- Schritt 3 Ausrichten des Dosierorgans (14) der Prüfvorrichtung (11) zur Schleuderscheibe (12) der Prüfvorrichtung (11) zur Einstellung der Aufgabefläche (29) der Düngerpartikel auf dieser Schleuderscheibe (12), so dass die Düngerpartikel in Richtung der Messeinrichtung (5) abgeschleudert werden;
- Schritt 4 Aufbringen von Düngerpartikeln auf die Schleuderscheibe (12) der Prüfvorrichtung (11) in einem ersten Streuvorgang, Erfassung der Düngerpartikel von den Sensoren (15) und Übertragung der von den Sensoren (15) ermittelten Messdaten an eine Datenverarbeitungseinrichtung (8);
- Schritt 5 Ermittlung des Mengenmaximums der Düngerpartikel im Düngerfächer (2) und dessen Position auf Basis der Messdaten aus dem ersten Streuvorgang mittels der Datenverarbeitungseinrichtung (8) und Einstellung der Aufgabefläche (29) der Düngerpartikel auf die Schleuderscheibe (12) gemäß des Mengenmaximums der Düngerpartikel und dessen Position für einen zweiten Streuvorgang mit einem angestrebten Mengenmaximum der Düngerpartikel im Düngerfächer (2) zumindest annähernd senkrecht oberhalb der längeren Messeinrichtung (5);
- Schritt 6 Durchführen eines zweiten Streuvorgangs mit der nach Schritt 5 ermittelten Einstellung und Bestimmung von Messdaten **durch** die Sensoren (15) und den Wiegeeinheiten (4) der längeren Messeinrichtung (5) und deren Übertragung an die Datenverarbeitungseinrichtung (8), aus denen **durch** die Datenverarbeitungseinrichtung (8) auf Basis der übermittelten Messdaten des zweiten Streuvorgangs Einstelldaten für den Zentrifugalstreuer ermittelt werden.

2. Verfahren nach Anspruch 1, **dadurch gekennzeichnet, dass** die Düngerpartikel von den Wurfschaufeln (13) über eine längere, als langgestreckte Messeinrichtung (5) ausgebildete und lückenlos aneinander angeordnete Auffangschalen (6), denen die Wiegeeinheiten (4) zugeordnet sind, aufweist, abgeschleudert werden.

3. Verfahren nach Anspruch 2, **dadurch gekennzeichnet, dass** die Menge der von jeder Auffangschale (6) aufgefangenen Düngerpartikel mit der zugehörigen Wurfweite auf Basis der Messdaten der Wiegeeinheiten (4) durch die Datenverarbeitungseinrichtung (8) ermittelt und daraus zusätzlich eine Ermittlung der mittleren Düngerpartikelverteilung über die Wurfweite und Arbeitsbreite mittels der Datenverarbeitungseinrichtung (8) vorgenommen wird.

4. Verfahren nach einem der vorstehenden Ansprüche, **dadurch gekennzeichnet, dass** die im Abstand zu den äußeren Enden der die Düngerpartikel abschleudernden Wurfschaufeln (13) angebrachten Sensoren (15) die abgeworfenen Düngerpartikel des Düngerfächers (2) an mehr als zwei voneinander beabstandeten Stellen erfassen.

5. Verfahren nach einem der vorstehenden Ansprüche, **dadurch gekennzeichnet, dass** zumindest einer der Sensoren (15) derart angebracht und/oder ausgerichtet ist, dass der Düngerfächer (2) annähernd im Bereich des Mengenmaximums erfasst wird.

6. Verfahren nach einem der vorstehenden Ansprüche, **dadurch gekennzeichnet, dass** zumindest ein Sensor (15) zum Erfassen zumindest annähernd mittig zwischen dem Mengenmaximum des Düngerfächers (2) und dem Ende des Düngerfächers (2) und zumindest ein weiterer Sensor (15) zumindest annähernd mittig zwischen dem Mengenmaximum des Düngerfächers (2) und dem Anfang des Düngerfächers (2) angebracht sind.

7. Verfahren nach einem der vorstehenden Ansprüche, **dadurch gekennzeichnet, dass** die Sensoren (15) mindestens einen Abwurfwinkel der abgeworfenen Düngerpartikel und/oder die entsprechende Menge der Düngerpartikel zu dem Abwurfwinkel und/oder die Geschwindigkeit der abgeworfenen Düngerpartikel erfassen und diese an die Datenverarbeitungseinrichtung (8) übertragen.

8. Verfahren nach einem der vorstehenden Ansprüche, **dadurch gekennzeichnet, dass** die Datenverarbeitungseinrichtung (8) aufgrund des gemessenen Abwurfwinkels und der gemessenen Wurfweite an den untersuchten Düngerpartikeln Einstelldaten für eine Streuempfehlung über die maximal mögliche Arbeitsbreite und/oder eine vorgegebene Arbeitsbreite für die untersuchten Düngerpartikel für einen Zentrifugalstreuer ermittelt.

9. Verfahren nach einem der vorstehenden Ansprüche, **dadurch gekennzeichnet, dass** mit einer verhältnismäßig geringen Menge von Düngerpartikel, beispielsweise 1,5 Liter, zumindest eine relevante Eigenschaft in Bezug auf das Einstellen von Zentrifugalstreuern ermittelt wird.

## Claims

1. Method for acquiring adjustment data of a centrifugal spreader which has two centrifugal discs (12) which are arranged spaced apart from one another, are driven so as to rotate in opposite directions, are fitted with throwing blades (13) and to which manure particles which can be discharged in a meterable fashion via adjustable metering elements (14) are fed and which has means for influencing the distribution accuracy of the manure particles, and in which the supplied manure particles are distributed in the form of a fan (2) of the manure by its throwing blades (13), wherein in the method the manure particles are thrown by a testing device (11), which has a centrifugal disc with throwing blades (13) and to which a metering element (14) is assigned, in the direction of a relatively long measuring device (5) which has balancing units (4), via the centrifugal disc (4) of the testing device (11), with the result that the measuring device (5) catches the manure particles landing on it, **characterized by** the following method steps:
- step 1 arrangement of at least one centrifugal disc (12) with an assigned metering element (14) at one end of the relatively long measuring device (5) in a spatial position which is invariable with respect to the measuring device (5) at least when the manure particles are being thrown;
- step 2 arrangement of at least two sensors (15) which operate in a contactless fashion, at a distance from the outer ends of the throwing blades (13), which scatter the manure particles and are driven in rotation, of the centrifugal disc (12) of the testing device (11) in order to record the measurement data of the manure particles which are scattered by the throwing blades (13);
- step 3 orientation of the metering element (14) of the testing device (11) with respect to the centrifugal disc (12) of the testing device (11) in order to adjust the feed face (29) of the manure particles on this centrifugal disc (12) in such a way that the manure particles are scattered in the direction of the measuring device (5);
- step 4 application of manure particles to the centrifugal disc (12) of the testing device (11) in a first scattering process, sensing of the manure particles by the sensors (15) and transmission of the measurement data, acquired by the sensors (15), to a data processing device (8);
- step 5 acquiring the maximum quantity of manure particles in the fan (2) of manure and its position on the basis of the measurement data from the first scattering process by means of the data processing device (8) and adjusting the feed face (29) of the manure particles onto the centrifugal disc (12) in accordance with the maximum quantity of the manure particles and its position for a second scattering process with an intended maximum quantity of manure particles in the fan (2) of manure, at least approximately perpendicularly above the relatively long measuring device (5);
- step 6 carrying out a second scattering process with the setting acquired according to step 5 and determining measurement data by means of the sensors (15) and the balancing units (4) of the relatively long measuring device (5) and their transmission to the data processing device (8), from which measurement data the data processing device (8) acquires adjustment data for the centrifugal spreader on the basis of the transmitted measurement data relating to the second scattering process.

2. Method according to Claim 1, **characterized in that** manure particles are scattered by the throwing blades (13) has by means of a relatively long collection pans (6) which are embodied as an elongate measuring device (5) and arranged continuously one next to the other and to which the balancing units (4) are assigned.

3. Method according to Claim 2, **characterized in that** the quantity of manure particles which are collected by each collection pan (6) and which have the associated throwing width is acquired by the data processing device (8) on the basis of the measurement data of the balancing units (4), and in addition a determination of the average manure particle distribution is performed on the basis thereof over the throwing width and the working width by means of the data processing device (8).

4. Method according to one of the preceding claims, **characterized in that** the sensors (15) which are attached at a distance to the outer ends of the throwing blades (13) which scatter the manure particles sense the scattered manure particles of the fan (2) of manure at more than two points which are spaced apart from one another.

5. Method according to one of the preceding claims, **characterized in that** at least of the sensors (5) is attached and/or oriented in such a way that the fan (2) of manure is sensed approximately in the region of the maximum quantity.

6. Method according to one of the preceding claims, **characterized in that** at least one sensor (15) for sensing is attached at least approximately centrally between the maximum quantity of the fan (2) of manure and the end of the fan (2) of manure and at least one further sensor (15) is attached at least approximately centrally between the maximum quantity of the fan (2) of manure and the start of the fan (2) of manure.

7. Method according to one of the preceding claims, **characterized in that** the sensors (15) sense at least one throwing angle of the thrown manure particles and/or the corresponding quantity of the manure particles at the throwing angle and/or the speed of the thrown manure particles and transmit the said angle and/or quantity to the data processing device (8).

8. Method according to one of the preceding claims, **characterized in that** the data processing device (8) determines adjustment data for a scattering recommendation over the maximum possible working width and/or a predefined working width for the examined manure particles for a centrifugal spreader on the basis of the measured throwing angle and the measured throwing width at the examined manure particles.

9. Method according to one of the preceding claims, **characterized in that** at least one relevant property relating to the adjustment of centrifugal spreaders is determined with a relatively small quantity of manure particles, for example 1.5 litres.

## Revendications

1. Procédé de détermination de données de réglage d'un répartiteur centrifuge qui présente deux disques rotatifs (12) disposés à distance l'un de l'autre, entraînés en rotation dans des sens contraires et doté d'aubes de projection (13), sur lesquels des particules d'engrais qui doivent être expulsées sont apportées de manière dosée par l'intermédiaire d'organes réglables de dosage (14) et qui présentent des moyens permettant d'agir sur la précision de la répartition des particules d'engrais,
dans lequel les particules d'engrais apportées sont réparties par les aubes de projection (13) en forme d'un éventail d'engrais (2),
tandis que dans le procédé, par l'intermédiaire d'un ensemble de vérification (11) présentant un disque rotatif doté d'aubes de projection (13) et associé à un organe de dosage (14), les particules d'engrais sont expulsées par le disque rotatif (12) de l'ensemble de vérification (11) en direction d'un dispositif de mesure (5) allongé présentant des unités de pesage (4), de telle sorte que le dispositif de mesure (5) reprend les particules d'engrais qui aboutissent sur lui, le procédé étant **caractérisé par** les étapes suivantes :
étape 1 placement d'au moins un disque rotatif (12) auquel est associé un organe de dosage (14) à une extrémité du dispositif de mesure (5) allongé, en une position spatiale inchangée par rapport au dispositif de mesure (5) au moins lors de l'expulsion des particules d'engrais,
étape 2 placement d'au moins deux capteurs (15) travaillant sans contact à distance des extrémités extérieures des aubes de projection (13) du disque rotatif (12) de l'ensemble de vérification (11) entraînées en rotation et expulsant les particules d'engrais, en vue de saisir des données de mesure des particules d'engrais projetées par les aubes de projection (13),
étape 3 orientation de l'organe de dosage (14) de l'ensemble de vérification (11) par rapport au disque rotatif (12) de l'ensemble de vérification (11) en vue d'ajuster la surface de réception (29) des particules d'engrais sur ce disque rotatif (12), de telle sorte que les particules d'engrais soient expulsées en direction du dispositif de mesure (5),
étape 4 placement de particules d'engrais sur le disque rotatif (12) de l'ensemble de vérification (11) dans une première opération de répartition, saisie des particules d'engrais par les capteurs (15) et transfert des données de mesure saisies par les capteurs (15) à un dispositif (8) de traitement de données,
étape 5 sur la base des données de mesure provenant de la première opération de répartition, détermination de la quantité maximale de particules d'engrais dans l'éventail (2) d'engrais et de sa position au moyen du dispositif (8) de traitement de données et ajustement de la surface de réception (29) des particules d'engrais sur le disque rotatif (12) en fonction de la quantité maximale de particules d'engrais et de leur position, en vue d'une deuxième opération de répartition, en visant une quantité maximale de particules d'engrais dans l'éventail (2) à engrais situé au moins approximativement verticalement audessus du dispositif de mesure (5) allongé et
étape 6 exécution d'une deuxième opération de répartition avec le réglage déterminé à l'étape 5, et détermination des données de mesure par les capteurs (15) et les unités de pesage (4) du dispositif de mesure (5) allongé et transmission au dispositif (8) de traitement de données de ces données à partir desquelles le dispositif (8) de traitement de données détermine des données de réglage du répartiteur centrifuge sur la base des données de mesure de la deuxième opération de répartition qui ont été transmises.

2. Procédé selon la revendication 1, **caractérisé en ce que** les particules d'engrais sont expulsées par les aubes de projection (13) présente par l'intermédiaire d'un coquilles de reprise (6), allongé en forme d'un dispositif de mesure (5) allongé et disposées en continu les unes contre les autres et auxquelles sont associées les unités de pesage (4).

3. Procédé selon la revendication 2, **caractérisé en ce que** la quantité de particules d'engrais reprise par chaque coquille de reprise (6) est déterminée avec la portée de projection sur la base des données de mesure des unités de pesage (4) par le dispositif (8) de traitement de données, suite à quoi la détermination de la répartition moyenne des particules d'engrais par l'intermédiaire de la portée de projection et de la largeur de travail est réalisée au moyen du dispositif (8) de traitement de données.

4. Procédé selon l'une des revendications précédentes, **caractérisé en ce que** les capteurs (15) placés à distance des extrémités extérieures des aubes de projection (13) qui expulsent les particules d'engrais détectent les particules d'engrais projetées dans l'éventail (2) d'engrais en plus de deux emplacements situés à distance l'un de l'autre.

5. Procédé selon l'une des revendications précédentes, **caractérisé en ce qu'**au moins l'un des capteurs (15) est placé et/ou orienté de telle sorte que l'éventail (2) d'engrais soit saisi à proximité de la zone où se trouve la quantité maximale.

6. Procédé selon l'une des revendications précédentes, **caractérisé en ce qu'**au moins un capteur (15) de détection est placé au moins approximativement au milieu entre la quantité maximale de l'éventail (2) d'engrais et la fin de l'éventail (2) d'engrais et au moins un autre capteur (15) est placé au moins approximativement au milieu entre la quantité maximale de l'éventail (2) d'engrais et le début de l'éventail (2) d'engrais.

7. Procédé selon l'une des revendications précédentes, **caractérisé en ce que** les capteurs (15) transmettent au moins un angle d'expulsion des particules d'engrais expulsées et/ou la quantité correspondante de particules d'engrais à l'angle d'expulsion et/ou la vitesse des particules d'engrais expulsées et les transmettent au dispositif (8) de traitement de données.

8. Procédé selon l'une des revendications précédentes, **caractérisé en ce que** le dispositif (8) de traitement de données détermine sur la base de l'angle d'expulsion mesuré, de la portée d'expulsion mesurée sur les particules d'engrais étudiées des données de réglage pour une recommandation de répartition sur la plus grande largeur de travail possible et/ou une largeur de travail prédéterminée pour les particules d'engrais étudiées, au bénéfice d'un distributeur centrifuge.

9. Procédé selon l'une des revendications précédentes, **caractérisé en ce qu'**au moins une propriété qui concerne le réglage de répartiteurs centrifuges est déterminée sur une quantité relativement petite de particules d'engrais, par exemple 1,5 litre.
